Europäisches Patentamt

European Patent Office

Office européen des brevets

(19)

(11) Veröffentlichungsnummer: **0 141 015**
**A2**

(12) # EUROPÄISCHE PATENTANMELDUNG

(21) Anmeldenummer: **84106674.9**

(22) Anmeldetag: **12.06.84**

(51) Int. Cl.⁴: **C 08 J 3/00**
**C 08 L 67/02**
**//(C08L67/02, 79:02)**

(30) Priorität: **08.08.83 DE 3328565**

(43) Veröffentlichungstag der Anmeldung:
**15.05.85 Patentblatt 85/20**

(84) Benannte Vertragsstaaten:
**CH DE FR GB IT LI NL**

(71) Anmelder: **CHEMISCHE WERKE HÜLS AG**
**- RSP Patente / PB 15 - Postfach 13 20**
**D-4370 Marl 1(DE)**

(72) Erfinder: **Horlbeck, Gernot, Dr.**
**In der Thiebrei 80**
**D-4358 Haltern(DE)**

(72) Erfinder: **Mumcu, Salih, Dr.**
**Leverkusener Strasse 12**
**D-4370 Marl(DE)**

(72) Erfinder: **Bittscheidt, Josef**
**Schillerstrasse 70**
**D-4370 Marl(DE)**

(54) **Verfahren zur Herstellung von kerbschlagzähen Formmassen auf Basis von Poly(alkylenterephthalaten).**

(57) Verfahren zur Herstellung von kerbschlagzähen Formmassen, wobei Kunststoffmischungen aus

A.  70 bis 95 Gew.-% Poly(alkylenterephthalat)
und
B.  5 bis 30 Gew.-% eines an sich bekannten Polyetheramids

bei Temperaturen 15 bis 60 °C unterhalb des Schmelzpunktes der reinen Komponente A. in einer Inertgasatmosphäre thermisch behandelt werden.

EP 0 141 015 A2

CHEMISCHE WERKE HÜLS AG     - 1 -     o.Z. 3920 **0141015**

- RSP PATENTE -

<u>Verfahren zur Herstellung von kerbschlagzähen Form-
massen auf Basis von Poly(alkylenterephthalaten)</u>

Gegenstand der Erfindung ist ein Verfahren zur Herstellung von kerbschlagzähen Formmassen erhalten durch thermische Behandlung von Kunststoffmischungen, die überwiegend Poly(alkylenterephthalat) enthalten, in fester
Form - sowie die so erhaltenen Formmassen als solche.

Poly(alkylenterephthalate) sind wertvolle Konstruktionswerkstoffe mit einer Reihe ausgezeichneter Eigenschaften
wie hoher Steifigkeit, Oberflächenhärte, Abriebfestigkeit, guter Wärmeformbeständigkeit, Maßhaltigkeit und
schneller Verarbeitbarkeit zu komplizierten und großen
Formteilen.

Für manche Anwendungsbereiche ist jedoch die Kerbschlagzähigkeit der Poly(alykenterephthalate) insbesondere
bei Temperaturen unterhalb von 20 $^{o}$C ungenügend, so daß
die Notwendigkeit besteht, Poly(alkylenterephthalat)-
Formmassen mit verbessertem Niveau der Kerbschlagzähigkeit zu entwickeln.

Es existieren bereits zahlreiche Vorschläge, die Kälteschlagzähigkeit von Poly(alkylenterephthalat)-Formmassen
durch Einkondensation aliphatischer Dicarbonsäuren oder
Diolgemische oder durch Abmischen mit anderen Polymeren
wie modifizierten Elastomeren und Polyolefinen zu verbessern.

Allen beschriebenen Maßnahmen haftet jedoch der Mangel
an, daß entweder die Zunahme der Kälteschlagzähigkeit
nur geringfügig ist oder daß eine deutliche Verbesserung
der Kälteschlagzähigkeit mit einer unerwünschten Verschlechterung anderer Eigenschaften, insbesondere der
Steifigkeit und Wärmeformbeständigkeit, verbunden ist.

So beschreibt insbesondere DE-OS 29 30 343 Formmassen auf Basis von Poly(alkylenterephthalat), die Polyetheresteramide eingemischt enthalten, um die Schlagzähigkeit zu verbessern. Es hat sich jedoch als nachteilig erwiesen, daß relativ hohe Anteile des Polyetheresteramids in das Poly(alkylenterephthalat) eingearbeitet werden mussen, um überhaupt eine Anhebung des Niveaus der Kerbschlagzähigkeit zu erreichen. Infolge solcher hohen Anteile der zweiten Komponente verschlechtern sich Steifigkeit und Wärmeformbeständigkeit des Polyesters deutlich.

Aufgabe der Erfindung war es, die geschilderten Nachteile des Standes der Technik zu beheben.

Es wurde nun ein Verfahren zur Herstellung verbesserter Formmassen gefunden, in dem eine Kunststoffmischung aus

A. 70 bis 95 Gew.-% Poly(alkylenterephthalat) und

B. 5 bis 30 Gew.-% eines an sich bekannten Polyetheramids

bei Temperaturen 15 bis 60 $^{o}$C unterhalb des Schmelzpunktes der reinen Komponente A. in einer Inertgasatmosphäre behandelt wird.

Weiterer Gegenstand der Erfindung sind die Formmassen, die nach dem oben geschilderten Verfahren erhalten werden.

Als Poly(alkylenterephthalate) für die Komponente A. kommen Poly(ethylenterephthalat), Poly(propylenterephthalat) und vorzugsweise Poly(butylenterephthalat) in Frage.

0141015
O.Z. 3920

Bis zu 20 Mol-%, vorzugsweise 5 bis 15 Mol-%, der Terephthalsäure im Poly(alkylenterephthalat) können durch aromatische, cycloaliphatische oder aliphatische Dicarbonsäuren ersetzt werden. Beispiele geeigneter Dicarbonsäuren sind Isophthalsäure, Phthalsäure, Cyclohexan-1.4-dicarbonsäure, Adipinsäure, Sebazinsäure, Azelainsäure, Decandicarbonsäure o. ä.

Bis zu 20 Mol-%, vorzugsweise 5 bis 15 Mol-%, des jeweiligen Alkandiols im Poly(alkylenterephthalat) können durch andere Diole wie beispielsweise Ethylenglykol, Propandiol-(1.3), Hexandiol-(1.6), Neopentylglykol, 1.4-Dimethylolcyclohexan, Dodecandiol-(1.12) o. ä. ersetzt sein.

Das erfindungsgemäß verwendete Poly(alkylenterephthalat) wird in üblicher Weise durch Um- oder Veresterung und anschließende Polykondensation von Terephthalsäure oder deren polyesterbildenden Derivaten sowie dem entsprechenden Alkandiol in Gegenwart von Katalysatoren hergestellt (Sorensen und Campbell, Preparative Methods of Polymer Chemistry, Interscience Publishers Inc., N.Y., 1961, Seiten 111 bis 127; Kunststoff-Handbuch, Band VIII, C. Hanser Verlag München, 1973, bzw. Journal of Polymer Science, Part A 1, 4, Seiten 1851 bis 1859, 1966).

Das Poly(alkylenterephthalat), welches erfindungsgemäß eingesetzt wird, besitzt eine Viskositätszahl (J) von etwa 55 bis 100 $cm^3/g$, vorzugsweise von 65 bis 95 $cm^3/g$.

Die Polyetheramide der Komponente B. werden durch Kondensieren von

1. einer oder mehrerer polyamidbildender Verbindungen aus der Gruppe der $\omega$-Aminocarbonsäuren bzw. Lactame mit mindestens 10 C-Atomen,

2. einem Diamin mit einem Polyetherblock, der vorzugsweise 6 bis 30 Ethersauerstoffatome enthält, die durch eine lineare aliphatische Kette von vorzugsweise 3 bis 4 C-Atomen voneinander getrennt sind,

3. einer oder mehrerer weiterer aliphatischer, cycloaliphatischer oder aromatischer Dicarbonsäuren

erhalten.

Als polyamidbildende Verbindung (B.1) werden $\omega$-Aminocarbonsäuren bzw. Lactame mit mindestens 10 C-Atomen, vorzugsweise Laurinlactam, $\omega$-Aminododecansäure oder $\omega$-Aminoundecansäure, verwendet. Eine weitere bevorzugte Möglichkeit besteht darin, anstelle der monomolekularen Aminocarbonsäuren bzw. Lactame, deren Polymere oder Copolymere mit einem mittleren Molekulargewicht von 500 bis 20 000, vorzugsweise von 4 000 bis 15 000, einzusetzen.

Die angegebenen Werte für die mittleren Molekulargewichte ergeben sich durch Bestimmung der Endgruppenkonzentration (Amin- und Säurezahl).

Diamine der Komponente B.2 sind von Ethylenoxid, Propylenoxid und Tetrahydrofuran abgeleitet. Die Polyether können Homo- und/oder Copolymere sein. Auch Gemische von Homo- und/oder Copolymeren können eingesetzt werden. Ihre zahlenmittleren Molgewichte bewegen sich zwischen 160 und 3 000, vorzugsweise zwischen 300 und 2 200, insbesondere zwischen 500 und 1 200. Bevorzugt wird Polytetrahydrofuran mit Amino-Endgruppen (z. B. Bis(3-aminopropyl)-polytetrahydrofuran eingesetzt.

Die Herstellung von Polyalkylenoxiden mit Amino-Endgruppen kann nach bekannten Verfahren z. B. gemäß DE-OSS 15 70 542, 24 12 056, 24 12 057 und US-PS 2 401 607 erfolgen.

Die angegebenen Molekulargewichte lassen sich durch Titration der Aminogruppen ermitteln.

Die Komponente B.3 wird durch aliphatische, cycloaliphatische oder aromatische Dicarbonsäuren mit 4 bis 12 C-Atomen im Kohlenstoffgerüst gebildet. Beispielsweise seien Adipinsäure, Pimelinsäure, Korksäure, Azelainsäure, Sebazinsäure, Dodecandisäure, Hexahydroterephthalsäure oder die Phthalsäuren genannt. Bevorzugt für diese Komponente werden Terephthalsäure und Dodecandisäure eingesetzt.

Die Polyetheramide sind in der Weise aufgebaut, daß sie in der Polymerkette Homo- bzw. Copolyamidsegmente und Polyether - bzw. Polyetheramidsegmente aufweisen. Das Gewichtsverhältnis der Komponenten B.1 und (B.2 + B.3) bewegt sich im Bereich von 20 : 80 bis zu 50 : 50. Bevorzugt ist ein Gewichtsverhältnis im Bereich von 25 - 45 : 75 - 55. Die Amin- und Carboxylgruppen von (B.2 + B.3) liegen in etwa äquivalenten Anteilen, d. h. in einem Verhältnis von 1 : 0,95 bis 1 : 1,05, vor.

Ihre Herstellung erfolgt beispielsweise durch Zusammenschmelzen der Komponenten und einer daran anschließenden Polykondensation. Bei Verwendung von Lactamen müssen die Lactamringe vor der Polykondensation - vorzugsweise in Gegenwart der Dicarbonsäure - gespalten werden.

Bevorzugte Polyetheramide werden durch Umsetzung von $\omega$-Aminoundecansäure und/oder $\omega$-Aminododecansäure bzw. Laurinlactam, Dodecandisäure und/oder Terephthalsäure und Bis(3-aminopropyl)-polytetrahydrofuran des Molgewichts 500 bis 1 200 hergestellt.

Die Viskositätszahl (J) dieser Produkte liegt im Bereich von 140 bis 260, vorzugsweise 160 bis 210, $cm^3/g$.

Die Herstellung derartiger Polyetheramide ist beispielsweise aus DE-PS 29 32 234, DE-OS 29 36 976 und
EP-PS 25 828 zu entnehmen.

Die Polyetheramide haben zu 5 bis 30 Gew.-%, vorzugsweise 10 bis 25 Gew.-%, Anteil an der Kunststoffmischung. Der Rest wird durch das Poly(alkylenterephthalat)
der Komponente A. gebildet.

Zur Durchführung der thermischen Behandlung der Kunststoffmischungen werden die Komponenten A. und B. miteinander gemischt. Um bei der weiteren Bearbeitung Entmischungserscheinungen zu vermeiden, wird das Gemisch
vorzugsweise aufgeschmolzen, homogenisiert und anschließend in die endgültige Bearbeitungsform gebracht,
wie z. B. Pellets, Granulate, Pulver etc. Bevorzugt wird
dieser Arbeitsgang in einem Extruder bei Temperaturen von
ca. 260 bis 280 $^{\circ}$C durchgeführt. Jedoch kann auch jedes
andere bekannte und für den genannten Zweck brauchbare
Verfahren angewendet werden.

Die so hergestellte Kunststoffmischung wird etwa 2 bis
12 Stunden, vorzugsweise 4 bis 10 Stunden, bei einer
Temperatur, die 15 bis 60 $^{\circ}$C, vorzugsweise 20 bis 50 $^{\circ}$C,
unterhalb des Schmelzpunktes der jeweiligen reinen Komponente A. liegt, in einer Inertgasatmosphäre und
vorzugsweise unter Bewegen der Kunststoffmischung thermisch behandelt. Es kann sowohl bei Normaldruck als auch
in einem leichten Vakuum gearbeitet werden. Die Behandlung
kann z. B. in einem Taumeltrockner oder Wirbelschichtreaktor durchgeführt werden.

Als Inertgas kommt insbesondere Stickstoff in Frage. Es
können aber auch andere Inertgase eingesetzt werden. Es
hat sich als vorteilhaft erwiesen, wenn in einem leichten Inertgasstrom gearbeitet wird.

Übliche Zusatz- und Hilfsstoffe wie Pigmente, Verarbeitungsmittel, Füll- und Verstärkungsstoffe, Hydrolyse-, Thermo- oder UV-Stabilisatoren können sowohl während der Herstellung (Schmelzmischung) als auch in die fertigen, behandelten Formmassen eingearbeitet werden.

Das erfindungsgemäße Verfahren zeichnet sich gegenüber dem Stand der Technik dadurch aus, daß

a) Poly(alkylenterephthalat)-Formmassen schon durch wesentlich geringere Polyetheramid-Zusätze kerbschlagzäh eingestellt werden können und somit hohe Steifigkeit und Wärmeformbeständigkeit neben gutem Zähigkeitsniveau aufweisen, und

b) Poly(alkylenterephthalat)-Formmassen, die mit dem bisher zur Erzielung einer nur mäßigen Kerbschlagverbesserung notwendigen hohen Polyetheramid-Anteil modifiziert werden, jetzt eine ausgezeichnete Kerbschlagzähigkeit, insbesondere bei tieferer Temperatur, zeigen.

Der Lösungsweg ist vor allem deswegen für einen Fachmann überraschend, da sowohl die Festphasennachkondensation einer reinen Poly(alkylenterephthalat)-Formmasse als auch das einfache Abmischen derartiger Formmassen mit einer Vielzahl die Kerbschlagzähigkeit verbessernder Polymeren nicht die beabsichtigten Ergebnisse erbracht haben. Ebenso unerwartet ist das erfindungsgemäße Ergebnis auch deswegen, weil die Abmischung aus einem der Festphasennachkondensation unterworfenen Polyester mit einem Polyetheramid keine besondere Wirkung ergibt - eine deutliche Wirkung ergibt sich erst dann, wenn die Kunststoffmischung selbst den erfindungsgemäßen Bedingungen unterworfen wird.

Die in der Beschreibung und in den Beispielen aufgeführten Parameter wurden mittels der nachstehend genannten Meßmethoden bestimmt:

Die Viskositätszahl (J) des Poly(alkylenterephthalats) wurde an Lösungen von 0,23 g Polyester in 100 ml Phenol/sym-Tetrachlorethan (60/40 Gew.-Teile) bei 25 °C gemessen.

Die Viskositätszahl (J) der reinen Polyetheramide wurde an Lösungen von 0,5 g Produkt bei 25 °C in 100 ml m-Kresol bestimmt (DIN 53 727).

Kerbschlagzähigkeit gemäß DIN 53 453
Grenzbiegespannung gemäß DIN 53 452
Zug-E-Modul gemäß DIN 53 457/2.1
Wärmeformbeständigkeit gemäß ISO/R 75 (Verfahren A und B)

Die mit Buchstaben gekennzeichneten Beispiele sind nicht erfindungsgemäß.

Beispiele

Versuche 1 bis 3 und A
In einem 0,5 m³-Taumeltrockner werden 120 kg der Kunststoffmischung in Form von Granulat (Zusammensetzung s. Tabelle 1) unter den in Tabelle 1 angegebenen Bedingungen thermisch behandelt.

Die charakteristischen Eigenschaften der Formmassen werden in Tabelle 2 und 3 wiedergegeben.

Versuch B
Eine trockene Mischung von Poly(butylenterephthalat)- und Polyetheramid-Granulat der in Tabelle 1 angegebenen Zusammensetzung wird bei 265 °C in einem Doppelschneckenextruder aufgeschmolzen und homogenisiert.

Tabelle 1

| Versuch | Kunststoffmischung [Gew.-Teile] | Bedingungen der thermischen Behandlung | | |
|---|---|---|---|---|
| | | Temperatur [°C] | Zeit [h] | N₂-Strom [l/h] |
| 1 | 85 PBTP[1] (J = 90 cm³/g)<br>15 PEA[2] enthaltend<br>30 Gew.-% LL[3]<br>70 Gew.-% PTHF[4]/DDS[5]<br>(äquimolar; J = 155 cm³/g) | 200 | 3 | 100 |
| 2 | 80 PBTP[1] (J = 90 cm³/g)<br>20 PEA[2] enthaltend<br>36 Gew.-% LL[3]<br>64 Gew.-% PTHF[4]/DDS[5]<br>(äquimolar; J = 165 cm³/g) | 190 | 4 | 120 |
| 3 | 80 PBTP[1] (J = 90 cm³/g)<br>20 PEA[2] enthaltend<br>40 Gew.-% LL[3]<br>60 Gew.-% PTHF[4]/DDS[5]<br>(äquimolar; J = 160 cm³/g) | 195 | 4 | 85 |
| A | 100 PBTP[1] (J = 90 cm³/g) | 200 | 4 | 85 |
| B | 85 PBTP[1] (J = 106 cm³/g)<br>15 PEA[2] enthaltend<br>30 Gew.-% LL[3]<br>70 Gew.-% PTHF[4]/DDS[5]<br>(äquimolar; J = 155 cm³/g) | - | - | - |

Erläuterungen zu Tabelle 1 auf Seite 10

Erläuterungen zu Tabelle 1

1) PBTP: Poly(butylenterephthalat) - Viskositätszahl vor dem Einmischen
2) PEA: Polyetheramid
3) LL: Laurinlactam
4) PTHF: Poly(tetrahydrofuran)diol (Molmasse 750 - Zahlenmittel)
5) DDS: Dodecandisäure

Tabelle 2

| Versuch | Zug-E-Modul $[N/mm^2]$ | Grenzbiegespannung $[N/mm^2]$ | Wärmeformbeständigkeit $[^{o}C]$ | |
|---|---|---|---|---|
| | | | Verfahren A | Verfahren B |
| 1 | 1 950 | 78 | 63 | 155 |
| 2 | 1 910 | 76 | 61 | 151 |
| 3 | 1 870 | 73 | 60 | 149 |
| A | 2 400 | 88 | 70 | 170 |
| B | 1 950 | 78 | 64 | 157 |

Tabelle 3

| Versuch | Viskositätszahl (J) der Kunststoffmischung $[cm^3/g]$ | | Kerbschlagzähigkeit $[kJ/m^2]$ | | |
| | vor | nach | vor | | nach |
| | der thermischen Behandlung | | der thermischen Behandlung | | |
| | | | 23 °C | 23 °C | -20 °C |
| 1 | 93 | 111 | 11,6 | 39,7 | 20,7 |
| 2 | 95 | 108 | 10,9 | 36,5 | 18,9 |
| 3 | 92 | 110 | 8,8 | 34,7 | 17,7 |
| A | 90 | 112 | 3,5 | 4,2 *) | 3,6 *) |
| B | 109 | - *) | 12,2 | - *) | - *) |

*) keine thermische Behandlung

Patentansprüche:

1. Verfahren zur Herstellung von kerbschlagzähen Formmassen erhalten durch thermische Behandlung von Kunststoffmischungen, die überwiegend Poly(alkylen- terephthalat) enthalten, in fester Form, dadurch gekennzeichnet, daß die Kunststoffmischung

    A. 70 bis 95 Gew.-% Poly(alkylenterephthalat) und

    B. 5 bis 30 Gew.-% eines an sich bekannten Polyetheramids

enthält und daß die Kunststoffmischung bei Tempera- turen 15 bis 60 $^{\circ}$C unterhalb des Schmelzpunktes der reinen Komponente A. in einer Inertgasatmosphäre behandelt wird.

2. Kerbschlagzähe Formmassen zusammengesetzt entsprechend Anspruch 1, wobei sie einer thermischen Behandlung gemäß Anspruch 1 unterworfen worden sind.